# EUROPEAN PATENT SPECIFICATION

(11) **EP 4 018 836 B1**
(45) Date of publication and mention of the grant of the patent: **10.12.2025**
(21) Application number: 20854418.9
(22) Date of filing: 12.08.2020
(51) Int. Cl.: A23G 1/02, A23G 1/00, A23G 1/04

(54) **METHOD FOR ALKALISING COCOA**
VERFAHREN ZUM ALKALISIEREN VON KAKAO
PROCÉDÉ D'ALCALINISATION DE CACAO

(30) Priority: 19.08.2019 ES 201930746
(43) Date of publication of application: 29.06.2022
(73) Proprietor: Universitat Politècnica de València, 46022 Valencia (ES)
(72) Inventor: BARAT BAVIERA, José Manuel, 46022 Valencia (ES); PÉREZ ESTEVE, Edgar, 46022 Valencia (ES); VALVERDE GARCÍA, Damián, 46022 Valencia (ES)
(74) Representative: Maslanka Kubik, Dorota Irena
(86) International application number: PCT/ES2020/070511
(87) International publication number: WO 2021/032899

(56) References cited:
- US-A- 3 754 928
- US-A- 4 784 866
- US-A1- 2002 045 002
- US-A1- 2015 118 372
- MUHAMMAD ZAMRUN FIRIHU: "2.45 GHZ MICROWAVE DRYING OF COCOA BEAN", JOURNAL OF ENGINEERING AND APPLIED SCIENCES, vol. 11, no. 9, October 2016 (2016-10-01), pages 11595 - 11598, XP055802376

## Description

### Field of the Invention

The present invention relates to the field of the production of cocoa-derived products, and more specifically to an improved method for alkalising cocoa.

### Background of the Invention

Cocoa powder, a product obtained from cocoa bean (*Theobroma cocoa*) after removing fats and milling to a very fine particle size, is a raw material of great importance in the food industry. Its applications include, among others, the preparation of biscuits, cakes, and other baked and pastry products, where cocoa powder provides flavour and aroma; the manufacture of chocolate beverages; the preparation of chocolates, toppings, and bonbons; as well as the aromatisation of ice creams, icings, and beverages.

In addition to sensory properties, natural cocoa powder stands out due to its large number of functional components that are increasingly associated with cardiovascular health benefits. These health properties are mainly attributed to polyphenols which are antioxidants present in cocoa and related to a large number of health benefits. Cocoa is rich in antioxidant compounds such as polyphenols, the major components of which are flavonoids that include, among others, proanthocyanidins (58-65%), catechins (29-38%), and anthocyanidins (1.7-4%). These polyphenols are similar to those that can be found in products such as wine, tea, or certain vegetables, and contribute to the formation of flavour precursors in cocoa and chocolate.

The functional properties associated with the consumption of cocoa polyphenols include, among others, their antioxidant capacity, where these polyphenols are capable of inhibiting lipid peroxidation and preventing the presence of free radicals which damage the organism at the cellular level. This damage caused by free radicals can increase the risk of developing cancer, cardiovascular diseases, and other degenerative diseases. Moreover, recent research links the consumption of cocoa polyphenols with a drop in blood pressure, analgesic, antithrombotic, anti-inflammatory, immunological, antimicrobial, and vasodilating effects. It has been shown that cocoa polyphenols also exhibit antimutagenic activity, in addition to reducing the levels of 8-hydroxy-20-deoxyguanosine, an oxidative DNA damage biomarker.

The cocoa powder production process is complex. This process starts with harvesting the cocoa cob or pod and extracting the 30-40 kernels that it contains. The kernels are fermented for the purpose of developing cocoa aroma precursors and reducing acidity and astringency.

The fermented kernels are then subjected to drying, the purpose of which is to reduce their moisture content, for which temperatures comprised between 120 and 150°C are used depending on the product.

After drying, the kernels are winnowed using a physical process that gives rise to cocoa nibs. These nibs are subjected to a high-temperature toasting process (120-150°C) which, in addition to reducing microbial load, contributes to the formation of aromas, flavours, and colours typical of cocoa products.

The process continues with the grinding and refining of the cocoa nibs, giving rise to a mixture of lean and fatty components in liquid form known as cocoa liquor which, after a pressing process, gives rise to two products: cocoa butter which is used as vegetable fat, and cocoa cake which is used for the preparation of cocoa products. The cocoa cake is then milled to a very fine particle size giving rise to natural cocoa powder.

In different parts of this process, the raw material (nib, liquor, cocoa cake or powder) can be subjected to a high-temperature treatment with an alkali (NaOH, K₂CO₃, etc.) known as alkalisation. The purpose of this process is to improve the technological and sensory properties of the raw material.

During alkalisation, the pH of cocoa is neutralised by reducing its acidity, its astringency is reduced due to the polymerisation of flavonoids, its solubility increases, and it develops aromas and flavours. Moreover, it develops colours ranging from soft light brown to darker brown with reddish tones due to the reaction between the pigments of the cocoa and the alkali in the presence of oxygen. Depending on the degree of alkalisation, different cocoa powders can be obtained: natural (non-alkalised) cocoa, lightly alkalised cocoa, medium alkalised cocoa, and heavily alkalised cocoa. Natural cocoa has a soft brown colour and an acidic, somewhat astringent, flavour. Slightly alkalised cocoa has a darker colour and a higher pH due to the alkalisation process. Mild chocolate flavours are enhanced by removing acidity and astringency. Lastly, heavily alkalised cocoas have a very dark colour and a more intense flavour.

The process conditions can vary considerably between different producers and/or products. Nevertheless, the main process variables are usually the type and amount of alkali used (generally between 1.5 and 6% potassium carbonate), the amount of water added to dissolve the alkali (15-40%), the reaction time (from 1 h to 24 h), and temperature (from 60-150°C). The amounts of added components (specifically alkali and water) are given in % by weight with respect to the weight of treated cocoa. Alkalisation is performed in pressure reactors which are stirred using blades. After alkalisation treatment, the water added to the sample is removed using a drying process. Finally, a grinding operation must be performed to transform the raw material into powder, even when the starting material is a powder, because the different particles aggregate during treatment, forming compact and very hard spheres.

This alkalisation treatment in conventional pressure reactors has several limiting aspects. First, adding to the raw material water which must be removed from the end product. In fact, the alkalisation process requires adding a large amount of water (generally between 20-30%) to the cocoa. After the alkalisation operation, this water must be removed by means of drying using hot air, such that the end product reaches a moisture below 5%. Microbial proliferations and enzymatic reactions occur above this value. The drying operation involves a high energy, and therefore economic, cost.

Another limiting aspect is that the heating of the particle (nib, cake, or powder) is superficial. During alkalisation, the water, heat, and alkali act mainly on the surface of the particle being treated, with a temperature gradient being produced from the outside to the inside of the particle. The larger the particle, the lower the penetration of the added water (entraining the alkali), and the less the particle heats up. Therefore, the treatment is less effective.

Moreover, powder alkalisation causes the appearance of compact and very hard spheres, which implies the use of a large amount of grinding energy. One option to improve the penetration of the alkali, water, and heat for increasing the effectiveness of the alkalisation process is to alkalise powder (previously ground cake). During the alkalisation of cocoa powder, powder particle aggregation occurs, generating very hard spheres measuring 0.5 cm in diameter. These spheres must be milled to again obtain the commercial product: powder. A very large amount of energy is used in the milling operation due to their hardness. Furthermore, it is sometimes impossible to achieve particle size distributions similar to those of natural (non-alkalised) cocoa.

Lastly, alkalisation causes losses of vitamins, amino acids, and polyphenols. Various complicated chemical reactions which intervene in flavour and colour development and can lead to an altered nutritional and functional profile of cocoa powders take place during alkalisation. On one hand, proteins can react with sugars through Maillard reactions. On the other, alkalisation favours the loss of antioxidant capacity as a result of the oxidation of polyphenols and their subsequent polymerisation, giving rise to the formation of insoluble quinones.

The percentage of losses depends greatly on the type of sample that is analysed. There is no correlation between the type of raw material and/or process variables and the influence thereof on the nutritional and functional profile of the samples. All the interventions performed in the industry to minimise the impact of the variables of the secondary processing on the raw material are based on the empirical approach.

US2002045002A1 discloses a process for producing cocoa components while conserving a significant amount of the cocoa polyphenols. The invention provides processes for extracting fat from cocoa beans and for otherwise processing cocoa beans to yield a cocoa component having conserved concentrations of polyphenols relative to the starting materials. It refers to a process comprising the steps of: harvesting, fermentation, drying, toasting, grinding and refining, and in particular it refers to fermentation step.

US3754928A discloses a process for producing dutched cocoa, which comprises mixing of cocoa and alkali, containing small amount of water, subjecting the mixture to frictional and compressive forces of sufficient intensity to raise its temperature to from 93°C - 149°C, the mixture is held in this range to carry out dutching.

### Summary of the Invention

The objective of the present invention is to provide a method for alkalising cocoa which solves at least one of the drawbacks of the prior art mentioned above.

Specifically, the present invention discloses, according to a first aspect, a method for alkalising cocoa which comprises the steps of:
a) mixing cocoa with water and an alkalising agent, wherein 10 to 30% water and 1 to 8% alkalising agent are used, the percentages being by weight with respect to the weight of the cocoa;
b) subjecting the mixture of step a) to a microwave heat treatment to alkalise and dry it, wherein the time range comprises from 0.5 to 10 minutes and the power ranges from 80 to 1800 W;
c) milling the mixture obtained in step b).

The cocoa product obtained at the end of step c) of the method according to the present invention preferably has a moisture content of less than 5%. To that end, according to a preferred embodiment, the method comprises the additional drying step for drying the alkalised mixture obtained in step b) until obtaining a moisture content equal to or less than 5%, when the mixture has a moisture content greater than 5% at the end of step b).

### Brief Description of the Drawings

The present invention will be better understood in reference to the following drawings illustrating preferred embodiments of the present invention which are provided by way of example and must in no way be interpreted as limiting of the invention:
Figure 1 is a graph showing the maximum time that a cocoa cake may be exposed until burnt aromas start to appear as a function of the power of the equipment, the percentage of water, and whether or not pressure is applied. Power is indicated in percentage of power, where 100% corresponds to 800 W. The samples are indicated as "NP" (no pressure, open container) and "WP" (with pressure, closed container), followed by the percentage of added water.
Figure 2 is a graph showing the moisture of the raw material (control) and of the alkalised product after applying a 5-minute treatment at 720 W on samples containing 0, 1, 3, and 6% potassium carbonate dissolved in 30% water.
Figure 3 is a graph showing the moisture reduction achieved using a 5-minute microwave heat treatment at 720 W on samples containing 0, 1, 3, and 6% potassium carbonate dissolved in 30% water.
Figure 4 shows moisture evolution according to the microwave power and treatment duration.
Figure 5 shows the total polyphenol content of the raw material (control) and of samples treated with 0, 1, 3, and 6% sodium hydroxide in 30% water for 5 minutes at a power of 720 W.
Figure 6 shows the antioxidant capacity of the raw material (control) and of samples treated with 0, 1, 3, and 6% sodium hydroxide in 30% water for 5 minutes at a power of 720 W.

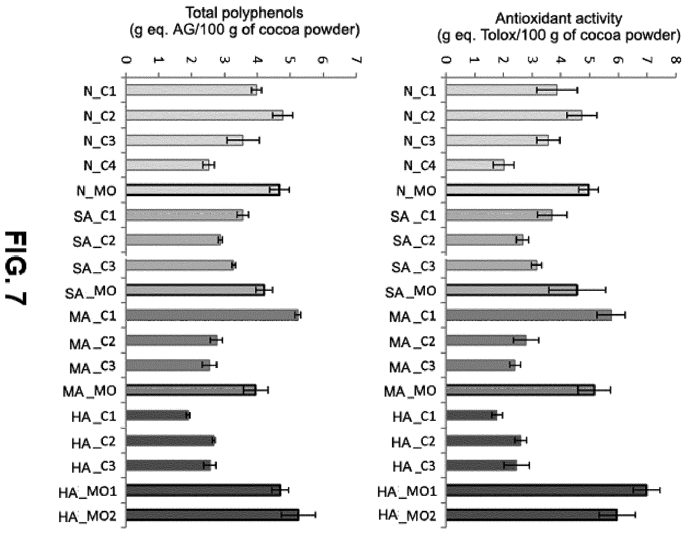

Figure 7 shows comparative graphs of the total polyphenol content and the antioxidant capacity between commercial samples (_C) and microwave heat-treated samples (_MO) of cocoas subjected to different alkalisation levels: N (natural, pH 5-6), SA (slightly alkaline, pH 6.0-7.2), MA (medium alkaline, pH 7.2-7.6), and HA (heavily alkaline, pH > 7.6). The samples treated using a method according to the present invention shown in these graphs were subjected to microwave heat alkalisation for 4 minutes at 90% power in a system with pressure. N_MO = cocoa + 20% water; SA_MO = cocoa + 20% water + 1% K₂CO₃; MA_MO = cocoa + 10% water + 3.5% K₂CO₃; HA_MO1 = cocoa + 20% water + 3.5% K₂CO₃; HA_MO2 = cocoa + 20% water + 6% K₂CO₃. The commercial samples used as reference were as follows: N_C1 = N55 (Macao); N_C2 = N11N (De Zaan); N_C3 = SN (De Zaan); N_C4 = N11D (De Zaan); SA_C1 = S7 (De Zaan; SA_C2 = L68 (Macao); SA_C3 = D11DQ; MA_C1 = M75 (Macao); MA_C2 = S75 (De Zaan); MA_C3 = D11MR (De Zaan); HA_C1 = S81 (Macao); HA_C2 = S82 (Macao); HA_C3 = S83 (Macao).

### Detailed Description of Preferred Embodiments

According to a preferred embodiment, the present invention relates to a quick method for alkalising cocoa which provides a product having sensory characteristics equivalent to the conventional product that is, however, drier, not compacted, and particularly does not reduce or even increase polyphenol contents and antioxidant capacity with respect to the starting cocoa.

The method for alkalising cocoa according to the preferred embodiment of the present invention comprises four steps:

### a) Mixing cocoa with water and an alkalising agent.

This is performed at proportions suitable for achieving the pH and the desired degree of darkening. Depending on the degree of alkalisation to be achieved, the proportion of water range from 10 to 30% and the proportion of alkali range from 1% to 8%, the percentages being by weight with respect to the weight of cocoa to be treated. For example: to obtain a reddish medium alkaline cocoa, cocoa:water:alkali must be mixed at a ratio of 100:30:3.5; to obtain a darker cocoa with the same pH, cocoa:water:alkali must be mixed at a ratio of 100:20:3.5. The types of alkalis used will also depend on the characteristics of the end product (sodium hydroxide, potassium hydroxide, calcium hydroxide, ammonium hydroxide, and magnesium hydroxide; sodium bicarbonate, potassium bicarbonate, and ammonium bicarbonate; sodium carbonate, potassium carbonate, and ammonium carbonate).

According to a preferred embodiment, mixing is performed in two steps. First, an alkali solution at the desired concentration is prepared. Second, the alkali solution is gradually added on the powder while applying an orbital mixing movement at the same time to oxygenate the product.

Mixing is performed by means of mechanical energy in open vessels (which allow the entry of oxygen) or hermetically closed vessels (which do not allow the entry of oxygen but increase the pressure of the system once microwave heat is applied).

### b) Subjecting the mixture of step a) to a microwave heat treatment to alkalise and dry it.

Microwave heat treatment can be performed discontinuously (the product contained in the mixing receptacle is placed inside a leak-tight chamber in which microwave heat is applied for a given time) or continuously (the product enters a microwave heat application chamber through a conduit or conveyor belt and microwave heat is applied for the time the product remains in the chamber). The treatment duration and power will depend on the degree of alkalisation to be achieved. In general, the time range comprises from 0.5 to 10 minutes and the power ranges from 80 to 1800 W. For example, in order to achieve a reddish colour, it will be necessary to apply a power of 800 W for 4 minutes on a mixture of cocoa with NaOH (6%) and water (30%).

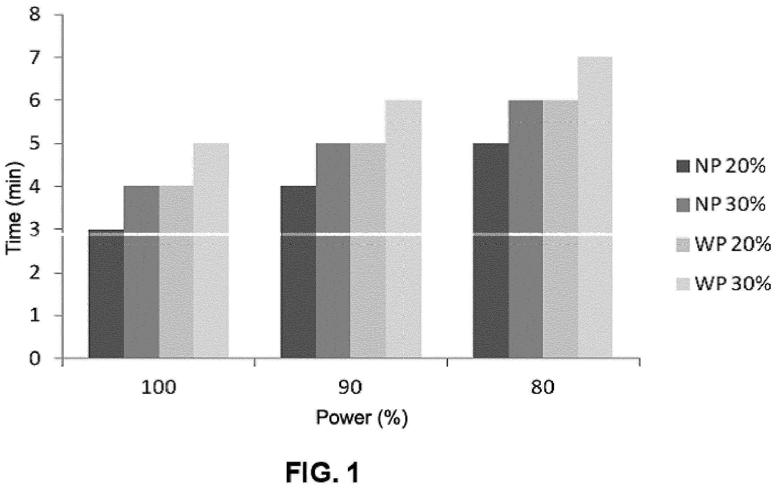

Figure 1 shows the time that microwave heat treatment can be applied to the powder without it getting burned, and this depends on the added percentage of water, the applied power, and whether or not a leak-tight vessel is used. For example, as can be seen in Figure 1, in the case of applying a water content of 30%, the cocoa mass can be heated at 800 W (100% power) in an open vessel (NP 30%) for only 4 minutes, whereas the time will go up to 5 minutes if a leak-tight container is used (WP 30%). By reducing the power to 600 W (80% power), the time increases to 6 minutes (open container, NP 30%) and to 7 minutes (closed container, WP 30%).

After microwave heat treatment, the cocoa may have a moisture between 0 and 35% depending on the amount of water contained in the cocoa at the beginning of treatment that has been evaporated (original (i.e., cocoa before treatment) + added in the mixing step for mixing the components). In other words, in step b) of the method according to the present invention, alkalisation and drying of the cocoa, water, and alkalising agent mixture, are performed simultaneously, as indicated above.

The moisture of the product at the end of the alkalisation process depends on several factors among which the amount of water used, the use of a closed or open system, the alkali content, and the treatment power and time, stand out.

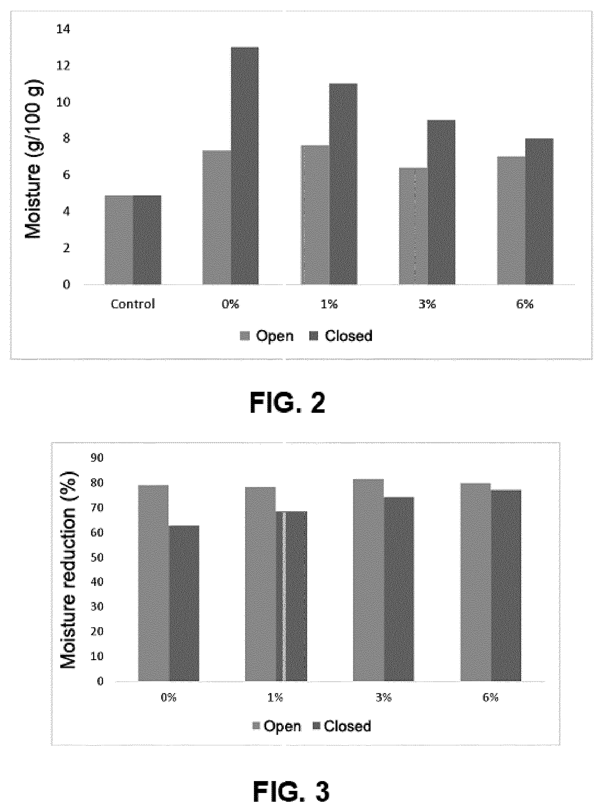

Figure 2 shows the moisture of cocoa samples alkalised in microwave heat using 30% water and a 5-minute treatment at a power of 720 W, varying the percentage of potassium carbonate between 0 and 6%, for both an open system and a closed system. As can be seen, cocoas alkalised in an open system lose much more water than those alkalised in a closed system. In turn, the more alkali used in the process, the lower the moisture of the end product after the alkalisation operation.

The percentage of moisture that the sample loses during microwave heat treatment, which ranges from 62 to 82% for this test (see Figure 3), can be calculated based on these data.

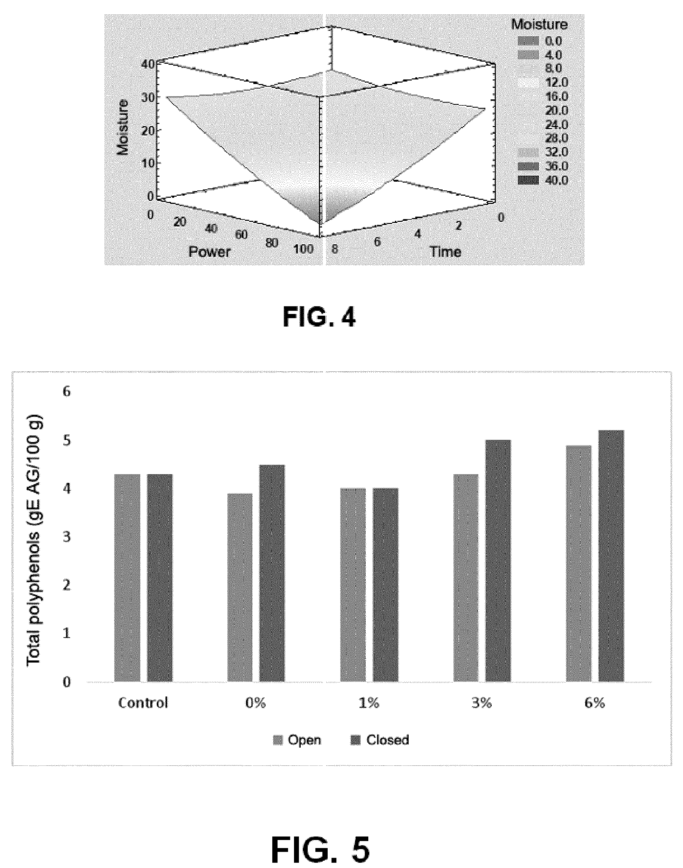

Through a surface-response test using the percentage of water (30%) and the amount of alkali (6%) as fixed variables (Figure 4), the treatment time and power that should be applied to the product so that complete drying is achieved was studied. It was possible to determine through the study that the conditions that allow the product to be dried to a moisture of less than 5% are at a power exceeding 80% and a time exceeding 6 minutes. As can be seen in Figure 1, the product does not get burned in these conditions.

Therefore, it has been concluded that the application of microwave heat removes between 60 and 100% of the moisture content of the sample without it getting burned.

### Optional drying step.

In the cases in which the microwave heat treatment fails to remove the moisture to below 5% (percentage considered as a safety limit in the cocoa industry to prevent microbial proliferation), the method according to the preferred embodiment of the present invention further comprises the optional drying step for drying the alkalised mixture obtained in step b) until obtaining said moisture content equal to or less than 5%. This drying step is preferably performed using a subsequent drying treatment using hot air.

### c) Milling the mixture obtained in step b) (or after the optional drying step)

The obtained product is preferably milled using a blade mill or a classifier mill until the desired particle size is obtained.

It has also been disclosed a cocoa product obtained using a method for alkalising such as the one described above. Said cocoa product in the form of powder alkalised by means of microwave heat application presents characteristics that are superior to the characteristics of commercial products.

In terms of the components of the CIE-Lab colour space (L, C*, and h), microwave heat treatment allows obtaining products similar to commercial products in the 4 product categories: natural (N, pH 5-6), slightly alkaline (SA, pH 6.0-7.2), medium alkaline (MA, pH 7.2-7.6), and heavily alkaline (HA, pH > 7.6). The results are shown in the following table.

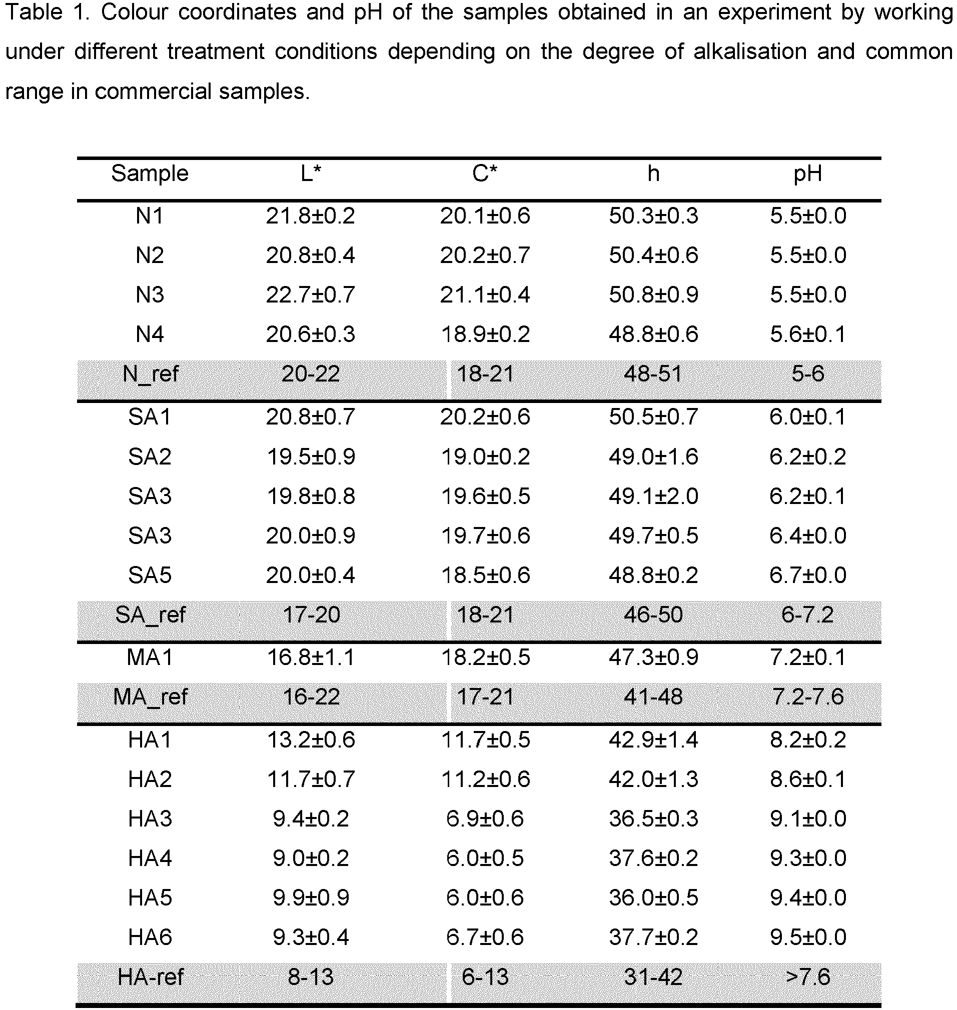

Natural (N), slightly alkaline (SA), medium alkaline (MA), and heavily alkaline (HA). REF: reference range determined by measuring said parameters in 5 randomly selected commercial samples.

At the sensory level, a tasting panel made up of expert tasters has determined that the microwave heat-treated samples have a profile similar to that of cocoas processed in conventional reactors.

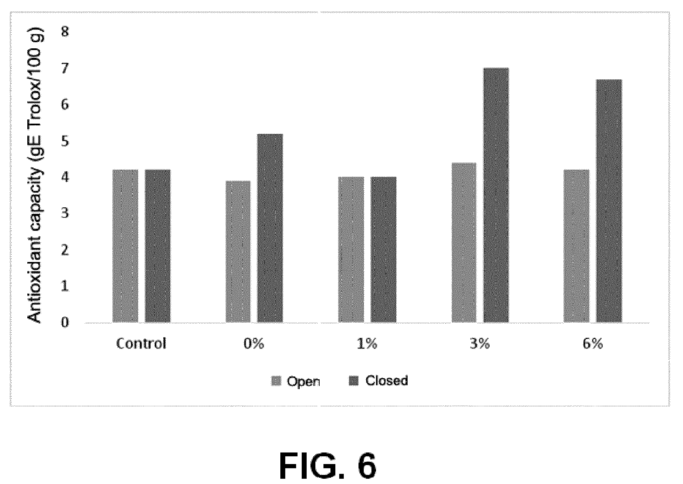

In a particularly interesting and unexpected manner, cocoas produced by means of microwave heat using the method according to the present invention present an antioxidant capacity and a total polyphenol content that are significantly superior compared to those of the commercial product and even superior compared to those of the original cocoa itself (see Figures 5, 6, and 7). The latter makes microwave heat alkalisation a method that is not only quicker, but also more friendly for the raw material being treated with respect to the conventional method.

Without wishing to be bound by a particular theory, this increase in total polyphenol content and in antioxidant capacity in the cocoa product according to the present invention is thought to be result of the release of non-extractable polyphenols. In fact, polyphenols in the raw material (the starting cocoa) can be free or forming complexes with other compounds (proteins, fibre, other phenols, etc.). These polyphenols are referred to as non-extractable polyphenols. These polyphenols appear to be released from the compound that retains it after microwave heat alkalisation treatment and become available to perform the antioxidant function.

Therefore, as can be inferred from the preceding description, the method for alkalising cocoa and the cocoa product according to the preferred embodiments of the present invention present several advantages with respect to the prior art.

First, the microwave heat treatment method (4-7 minutes) is much quicker than the conventional method (20-80 minutes), and this obviously results in a reduced method cost and a higher production capacity.

Moreover, unlike common heating by means of steam, heating by means of microwave heat causes a uniform heating of the entire particle (not only the surface), giving rise to a homogenous product in terms of colour and other properties.

In microwave heat powder alkalisation, particle agglomerations, which give rise to very hard, compact spheres, do not occur due to the short treatment time. Since these dense spheres are not generated, a much smaller amount of energy is applied for grinding the product, also resulting in a reduced method cost. Furthermore, the particle size achieved is much smaller and the particle size distribution is more homogenous.

Depending on the treatment power and time, moisture in the microwave heat itself is reduced by more than 70-90%, and this reduces the drying time (or even eliminates the drying step) before milling the cocoa cake or powder. This reduction in moisture during alkalisation itself means that the entire process is sped up and that process costs are reduced.

The bioavailable polyphenol content in the samples is increased, and this increases the functional value of these cocoas with respect to cocoas alkalised by means of conventional techniques. The total polyphenol content in the microwave heat-treated samples increases by at least 40%.

The increase in the *in vitro* antioxidant capacity of microwave heat-treated cocoas is superior compared to that of commercial samples.

The energy cost of the process drops drastically upon reducing the time of the alkalisation process, the energy required for drying the product, and the energy required for milling the product. The overall operating cost is reduced by reducing the energy cost.

Although the present invention has been described in reference to preferred embodiments thereof, one skilled in the art will understand that modifications and variations can be applied to said embodiments without departing from the scope of protection conferred by the following claims.

## Claims

1. A method for alkalising cocoa which comprises the steps of:
a) mixing cocoa with water and an alkalising agent, wherein 10 to 30% water and 1 to 8% alkalising agent are used, the percentages being by weight with respect to the weight of the cocoa;
b) subjecting the mixture of step a) to a microwave heat treatment to alkalise and dry it, wherein the time range comprises from 0.5 to 10 minutes and the power ranges from 80 to 1800 W;
c) milling the mixture obtained in step b).

2. The method according to claim 1, **characterised in that** the alkalising agent is selected from the group consisting of sodium hydroxide, potassium hydroxide, calcium hydroxide, ammonium hydroxide, magnesium hydroxide, sodium carbonate, potassium carbonate, and ammonium carbonate.

3. The method according to any of the preceding claims, **characterised in that** step a) comprises preparing a solution of alkalising agent in water and then gradually adding the solution of alkalising agent to the cocoa.

4. The method according to any of the preceding claims, **characterised in that** step a) is performed with orbital mixing.

5. The method according to any of the preceding claims, **characterised in that** step b) is performed using one of continuous or discontinuous microwave heat application.

6. The method according to any of the preceding claims, **characterised in that** it further comprises a drying step for drying the alkalised mixture obtained in step b) until obtaining a moisture content equal to or less than 5%, when the mixture has a moisture content greater than 5% at the end of step b).

7. The method according to claim 6, **characterised in that** the drying step is performed using hot air.

## Patentansprüche

1. Verfahren zum Alkalisieren von Kakao, welches die folgenden Schritte umfasst:
a) das Mischen von Kakao mit Wasser und einem Alkalisierungsmittel, wobei 10 bis 30 % Wasser und 1 bis 8 % Alkalisierungsmittel verwendet werden, wobei die Anteile Gewichtsanteile in Bezug auf das Gewicht des Kakaos sind;
b) das Aussetzen der Mischung aus Schritt a) einer Mikrowellenerwärmungsbehandlung, um sie zu alkalisieren und zu trocknen, wobei der Zeitbereich zwischen 0,5 und 10 Minuten liegt und die Leistung von 80 bis 1800 W reicht;
c) das Mahlen der in Schritt b) erhaltenen Mischung.

2. Verfahren nach Anspruch 1, **dadurch gekennzeichnet, dass** das Alkalisierungsmittel aus der Gruppe bestehend aus Natriumhydroxid, Kaliumhydroxid, Calciumhydroxid, Ammoniumhydroxid, Magnesiumhydroxid, Natriumcarbonat, Kaliumcarbonat und Ammoniumcarbonat ausgewählt wird.

3. Verfahren nach einem der vorhergehenden Ansprüche, **dadurch gekennzeichnet, dass** Schritt a) das Zubereiten einer Lösung von Alkalisierungsmittel in Wasser und dann das allmähliche Hinzufügen der Lösung von Alkalisierungsmittel zum Kakao umfasst.

4. Verfahren nach einem der vorhergehenden Ansprüche, **dadurch gekennzeichnet, dass** Schritt a) mit orbitaler Durchmischung durchgeführt wird.

5. Verfahren nach einem der vorhergehenden Ansprüche, **dadurch gekennzeichnet, dass** Schritt b) unter Verwendung einer kontinuierlichen oder diskontinuierlichen Anwendung von Mikrowellenerwärmung durchgeführt wird.

6. Verfahren nach einem der vorhergehenden Ansprüche, **dadurch gekennzeichnet, dass** es zusätzlich einen Trocknungsschritt zum Trocknen der alkalisierten, in Schritt b) erhaltenen Mischung, bis ein Feuchtigkeitsgehalt gleich oder kleiner als 5 % erhalten wird, wenn die Mischung einen Feuchtigkeitsgehalt größer als 5 % am Ende des Schritts b) aufweist, umfasst.

7. Verfahren nach Anspruch 6, **dadurch gekennzeichnet, dass** der Trocknungsschritt unter Verwendung von Heißluft durchgeführt wird.

## Revendications

1. Procédé d'alcalinisation de cacao comprenant les étapes consistant à :
a) mélanger du cacao avec de l'eau et un agent d'alcalinisation, dans lequel on utilise 10 à 30 % d'eau et entre 1 à 8 % d'agent d'alcalinisation, les pourcentages étant en poids par rapport au poids du cacao ;
b) soumettre le mélange de l'étape a) à un traitement thermique par micro-ondes pour l'alcaliniser et le sécher, dans lequel l'intervalle de temps comprend de 0,5 jusqu'à 10 minutes et la puissance varie entre 80 et 1800 W ;
c) broyer le mélange obtenu dans l'étape b).

2. Procédé selon la revendication 1, **caractérisé en ce que** l'agent d'alcalinisation est choisi parmi le groupe constitué par l'hydroxyde de sodium, l'hydroxyde de potassium, l'hydroxyde de calcium, l'hydroxyde d'ammonium, l'hydroxyde de magnésium, le carbonate de sodium, le carbonate de potassium, et le carbonate d'ammonium.

3. Procédé selon l'une quelconque des revendications précédentes, **caractérisé en ce que** l'étape a) comprend la préparation d'une solution d'agent d'alcalinisation dans l'eau water et puis l'ajout progressif de la solution d'agent d'alcalinisation au cacao.

4. Procédé selon l'une quelconque des revendications précédentes, **caractérisé en ce que** l'étape a) est réalisée avec un mélange orbital.

5. Procédé selon l'une quelconque des revendications précédentes, **caractérisé en ce que** l'étape b) est réalisée en utilisant une application de chaleur par micro-ondes continue ou discontinue.

6. Procédé selon l'une quelconque des revendications précédentes, **caractérisé en ce qu'**il comprend en outre une étape de séchage pour sécher le mélange alcalinisé obtenu dans l'étape b) jusqu'à l'obtention d'une teneur en humidité égale ou inférieure à 5 %, lorsque le mélange présente une teneur en humidité supérieure à 5 % à la fin de l'étape b).

7. Procédé selon la revendication 6, **caractérisé en ce que** l'étape de séchage est réalisée en utilisant de l'air chaud.
